(19) Europäisches Patentamt
European Patent Office
Office européen des brevets

(11) **EP 3 610 224 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(21) Anmeldenummer: **18716609.5**

(22) Anmeldetag: **09.04.2018**

(51) Int Cl.:
*G01C 21/00* *(2006.01)*    *G01S 19/39* *(2010.01)*
*G01S 19/42* *(2010.01)*    *G01S 19/53* *(2010.01)*

(86) Internationale Anmeldenummer:
**PCT/EP2018/058998**

(87) Internationale Veröffentlichungsnummer:
**WO 2018/189089 (18.10.2018 Gazette 2018/42)**

(54) **VERFAHREN, VORRICHTUNG UND COMPUTERLESBARES SPEICHERMEDIUM MIT INSTRUKTIONEN ZUR SCHÄTZUNG EINER POSE EINES KRAFTFAHRZEUGS**

METHOD, DEVICE, AND COMPUTER-READABLE STORAGE MEDIUM WITH INSTRUCTIONS FOR ESTIMATING THE POSE OF A MOTOR VEHICLE

PROCÉDÉ, DISPOSITIF ET SUPPORT D'ENREGISTREMENT LISIBLE PAR ORDINATEUR COMPRENANT DES INSTRUCTIONS SERVANT À ESTIMER UNE POSITION D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2017 DE 102017108107**

(43) Veröffentlichungstag der Anmeldung:
**19.02.2020 Patentblatt 2020/08**

(73) Patentinhaber: **Volkswagen Aktiengesellschaft**
**38440 Wolfsburg (DE)**

(72) Erfinder:
• **FRÖHLICH, Lukas**
**50997 Köln (DE)**
• **MERFELS, Christian**
**38102 Braunschweig (DE)**
• **RECH, Bernd**
**38556 Bokensdorf (DE)**
• **SCHAPER, Thilo**
**31275 Lehrte (DE)**
• **KOCH, Niklas**
**38448 Wolfsburg (DE)**
• **WILBERS, Daniel**
**38440 Wolfsburg (DE)**
• **MEYSEL, Frederik**
**38102 Braunschweig (DE)**

(74) Vertreter: **Schmidt-Uhlig, Thomas**
**Rittner & Partner**
**Patentanwälte mbB**
**Schiffgraben 17**
**30159 Hannover (DE)**

(56) Entgegenhaltungen:
EP-A1- 3 566 021      WO-A2-2008/069998
DE-A1-102011 005 584    DE-A1-102016 011 366

EP 3 610 224 B1

## Beschreibung

Die vorliegende Erfindung betrifft ein Verfahren, eine Vorrichtung und ein computerlesbares Speichermedium mit Instruktionen zur Schätzung einer Pose eines Kraftfahrzeugs, insbesondere zur Schätzung einer Pose eines Kraftfahrzeugs mittels eines Fusionsverfahrens. Die Erfindung betrifft weiterhin ein Kraftfahrzeug, in dem ein erfindungsgemäßes Verfahren oder eine erfindungsgemäße Vorrichtung eingesetzt wird.

Die Pose eines Fahrzeugs ist durch dessen Position und Orientierung gegeben. Ortungsfusionen nehmen eine Menge von Posenschätzungen sowie deren geschätzte Unsicherheiten, fusionieren diese und geben eine einzige Posenschätzung mitsamt Unsicherheitsschätzung aus. Beispiele für derartige Fusionsverfahren sind z.B. filterbasierte Algorithmen, wie das Kalman-Filter, das erweiterte Kalman-Filter, das Informationsfilter, das Unscented Kalman-Filter oder das Partikelfilter, oder Ausgleichungsansätze wie in DE 10 2015 219 577.

Die WO 2015/189183 A1 beschreibt ein Verfahren zur Korrektur von Ausgabedaten eines Sensorbasissystems, wobei das Sensorbasissystem und mindestens ein weiteres Sensorsystem Eingangsdaten erfassen und diese als Ausgabedaten ausgeben. Mittels der Ausgabedaten des mindestens einen weiteren Sensorsystems erfolgt eine Bestimmung von Fehlerwerten der Ausgabedaten des Sensorbasissystems. Die Fehlerwerte werden mittels einer Anbringung von Korrekturen korrigiert. Die Bestimmung der Fehlerwerte umfasst eine Bestimmung eines Fehlerwerts einer Steigung einer Kennlinie des Sensorbasissystems, wobei die Kennlinie eine Abhängigkeit der Ausgabedaten des Sensorbasissystems von den Eingangsdaten des Sensorbasissystems beschreibt. Die Ausgabedaten können zu einem Fusionsdatensatz fusioniert werden.

Die WO 2015/189204 A1 beschreibt ein Verfahren zur verbesserten Erkennung oder Kompensation von Fehlerwerten. Messwerte, physikalische Größen beschreiben, werden von einem Sensorsystem erfasst. Die Messwerte sind mit Fehlerwerten behaftet, welche Abweichungen der Messwerte von den beschriebenen physikalischen Größen beschreiben. Die Fehlerwerte werden mittels eines Vergleichs erkannt oder kompensiert. Dabei werden Messwerte, die einen Grenzwert überschreiten, nicht herangezogen, um Fehlerwerte anderer Messwerte zu erkennen oder zu kompensieren. Die Messwerte können zu einem Fusionsdatensatz fusioniert werden.

Die WO 2013/166096 A1 beschreibt einen Ansatz für die verteilte Positionierung und kollaborative Verhaltensermittlung innerhalb einer Gruppe von Objekten. Interaktive Markierungen, die jedem einer Vielzahl von Objekten zugeordnet sind, liefern zu jeder Markierung relative Positionsdaten und Zustandsinformationen bezüglich der anderen nahe gelegenen Objekte. Mit dieser Information entwickelt jedes Objekt ein räumliches Bewusstsein für seine Umgebung, einschließlich der Position und des Handelns von nahe gelegenen Objekten, um, wenn nötig, sein Verhalten zu modifizieren, um ein Ziel effektiver zu erreichen. Der beschriebene Ansatz integriert lokalisierte relationale Positionsdaten mit auf die räumliche Positionierung bezogenen fusionierten Sensordaten.

Die US 7,991,550 B2 beschreibt ein Verfahren zum gleichzeitigen Verfolgen einer Vielzahl von Objekten und zum Registrieren einer Vielzahl von Objekt-Lokalisierungssensoren, die an einem Fahrzeug angebracht sind, relativ zu dem Fahrzeug. Das Verfahren basiert auf gesammelten Sensordaten, historischen Sensorregistrierungsdaten, historischen Objekttrajektorien und einem gewichteten Algorithmus basierend auf geometrischer Nähe zum Fahrzeug und Varianz der Sensordaten. Für eine Bestimmung von Trajektorien der Objekte werden Sensordaten fusioniert.

Die DE 10 2013 208 521 A1 beschreibt ein Verfahren zum kollektiven Erlernen und Erstellen eines digitalen Straßenmodells beschrieben. Es werden dabei von einer Mehrzahl von Fahrzeugen Trajektorien- und Perzeptionsdaten erfasst. Es werden Assoziierungen zwischen den Trajektorien erstellt, indem für entsprechende, zu assoziierende Trajektorienpunkte Merkmalsraster und Wahrscheinlichkeitsfeld-Merkmalsraster gebildet werden und diese korreliert werden, um Assoziationshypothesen zu bilden. Basierend auf den Assoziierungen, sowie auf Basis von Odometrie- und Positionserfassungen wird ein Informationsgraph gebildet und das zugehörige Optimierungsproblem zur Schätzung optimaler Trajektorienpunkte gelöst. Die erfassten Perzeptionsdaten werden auf Basis der geschätzten Trajektorienpunkte bewertet, aggregiert und fusioniert, um ein hochgenaues Straßenmodell zu erstellen.

Die DE 10 2014 211 178 A1 beschreibt ein Verfahren zur Korrektur von Messdaten eines ersten Sensorsystems, wobei das erste Sensorsystem oder ein zweites Sensorsystem und ein Sensorbasissystem eng gekoppelt sind. Das erste Sensorsystem, das zweite Sensorsystem und das Sensorbasissystem erfassen jeweils unterschiedliche Messdaten.

Die Messdaten beschreiben jeweils direkt oder indirekt Navigationsdaten. Die indirekt beschriebenen Navigationsdaten werden aus den Messdaten oder aus bekannten physikalischen oder mathematischen Zusammenhängen berechnet. Die Messdaten des ersten Sensorsystems weisen erste Fehlerwerte auf, wobei die ersten Fehlerwerte bei Vorliegen einer ausreichenden Anzahl von Messdaten des zweiten Sensorsystems oder von Messdaten des Sensorbasissystems beobachtbar. Die ersten Fehlerwerte werden korrigiert, wenn sie beobachtbar sind und als konstant angenommen, wenn sie nicht beobachtbar sind. Die Navigationsdaten können zu einem Fusionsdatensatz fusioniert werden.

Die US 2016/0231432 A1 beschreibt ein Verfahren zur Ermittlung einer aktuellen Position eines Kraftfahrzeugs in einem geodätischen Koordinatensystem aus einer Zeitreihe von ersten, insbesondere durch einen einem globalen Navigationssatellitensystem zugeordneten Positionssensor aufgenommenen, geodätischen Positionsdaten und durch wenigstens einen Eigenbewegungssensor aufgenommenen Eigenbewegungsdaten. Die Position wird ermittelt durch Anwendung einer Transformation in das geodätische Koordinatensystem auf einen aus den aktuellsten, aus den Eigenbewegungsdaten hergeleiteten Verschiebungsvektor des Kraftfahrzeugs ab einem Referenzzeitpunkt, auf den sich die Transformation bezieht. Dabei wird die Transformation im Rahmen einer Regressionsanalyse als optimale Abbildung eines über einen definierten Zeitraum ermittelten Verlaufs von Verschiebungsvektoren auf einen für denselben Zeitraum ermittelten Verlauf der Positionsdaten bestimmt. Durch die Regressionsanalyse wird eine Fusion der Sensordaten realisiert.

Die US 2017/0038477 A1 beschreibt ein Verfahren zur Korrektur einer Position eines Fahrzeugs mit einem globalen Satellitennavigationssystem GNSS zum Bestimmen der Eigenposition. Zunächst wird eine erste Position des Fahrzeugs mittels des GNSS ermittelt. Eine zweite Position des Fahrzeugs wird durch Einpassen der ersten Position in eine Straße einer digitalen Karte ermittelt. Im Anschluss wird mindestens ein Objekt im Umfeld des Fahrzeugs identifiziert, dessen Position in der digitalen Karte referenzierbar ist. Mittels eines Sensors des Fahrzeugs wird ein realer Abstand zwischen dem Fahrzeug und dem jeweiligen Objekt ermittelt. Schließlich wird ein errechneter Abstand zwischen der zweiten Position und dem jeweiligen Objekt errechnet, wobei eine korrigierte Position des Fahrzeugs durch Minimieren der Abweichung des errechneten Abstands vom realen Abstand ermittelt wird. Das Ermitteln der ersten Position kann mittels einer Sensorfusionseinheit zum Zusammenführen und Plausibilisieren der Sensordaten erfolgen.

Bei den bekannten Lösungen tritt das Problem auf, dass ungenaue oder unwahrscheinliche und unplausible Posenschätzungen genauso verarbeitet werden wie genaue Posenschätzungen.

DE 10 2016 011 366 A1 beschreibt ein Verfahren zur Positionsbestimmung eines Fahrzeugs, das erweiterte Kalman-Filter und ein diskretes Bayesfilter kombiniert. Bei dem Verfahren wird eine jeweilige Hypothese bezüglich einer Absolutposition des Fahrzeugs in der Welt und einer Position des Fahrzeugs innerhalb eines jeweiligen Fahrstreifens einer Fahrbahn erstellt. Die erstellten Hypothesen werden anhand von Messwerten von Fahrzeugsensoren mittels einer Mehrzahl von erweiterten Kalman-Filtern verfolgt. Mittels des diskreten Bayesfilters wird aus den von den erweiterten Kalman-Filtern verfolgten Hypothesen die wahrscheinlichste Hypothese bestimmt.

Es ist eine Aufgabe der Erfindung, Lösungen zur Schätzung einer Pose eines Kraftfahrzeugs aufzuzeigen, die ein verbessertes Schätzergebnis erzielen.

Diese Aufgabe wird durch ein Verfahren mit den Merkmalen des Anspruchs 1, durch ein computerlesbares Speichermedium mit Instruktionen gemäß Anspruch 9 und durch eine Vorrichtung mit den Merkmalen des Anspruchs 10 gelöst. Bevorzugte Ausgestaltungen der Erfindung sind Gegenstand der abhängigen Ansprüche.

Gemäß einem ersten Aspekt der Erfindung umfasst ein Verfahren zur Schätzung einer Pose eines Kraftfahrzeugs die Schritte:

- Ermitteln von zumindest einer Posenschätzung; und
- Bestimmen einer Unsicherheit der zumindest einen Posenschätzung, wobei das Bestimmen der Unsicherheit der Posenschätzung eine auf einem Vergleich der Posenschätzung mit A-Priori-Information beruhende Skalierung einer Unsicherheitsschätzung der Posenschätzung umfasst, wobei es sich bei der A-Priori-Information um eine Vergleichs-Trajektorie handelt und wobei die Unsicherheitsschätzung umso größer skaliert wird, je größer der Abstand der zugehörigen Posenschätzung zur Vergleichs-Trajektorie ist.

Gemäß einem weiteren Aspekt der Erfindung enthält ein computerlesbares Speichermedium Instruktionen, die bei Ausführung durch einen Computer den Computer zur Ausführung der folgenden Schritte zur Schätzung einer Pose eines Kraftfahrzeugs veranlassen:

- Ermitteln von zumindest einer Posenschätzung; und
- Bestimmen einer Unsicherheit der zumindest einen Posenschätzung, wobei das Bestimmen der Unsicherheit der Posenschätzung eine auf einem Vergleich der Posenschätzung mit A-Priori-Information beruhende Skalierung einer Unsicherheitsschätzung der Posenschätzung umfasst, wobei es sich bei der A-Priori-Information um eine Vergleichs-Trajektorie handelt und wobei die Unsicherheitsschätzung umso größer skaliert wird, je größer der Abstand der zugehörigen Posenschätzung zur Vergleichs-Trajektorie ist.

Der Begriff Computer ist dabei breit zu verstehen. Insbesondere umfasst er auch Steuergeräte und andere prozessorbasierte Datenverarbeitungsvorrichtungen.

Gemäß einem weiteren Aspekt der Erfindung weist eine Vorrichtung zur Schätzung einer Pose eines Kraftfahrzeugs auf:

- Eine Datenerfassungseinheit zum Ermitteln von zumindest einer Posenschätzung; und
- Eine Bewertungseinheit zum Bestimmen einer Unsicherheit der zumindest einen Posenschätzung, wobei die Bewertungseinheit eingerichtet ist, beim Bestimmen der Unsicherheit der Posenschätzung eine auf einem Vergleich der Posenschätzung mit A-Priori-Information beruhende Skalierung einer Unsicherheitsschätzung der Posenschätzung durchzuführen, wobei es sich bei der A-Priori-Information um eine Vergleichs-Trajektorie handelt und wobei die Unsicherheitsschätzung umso größer skaliert wird, je größer der Abstand der zugehörigen Posenschätzung zur Vergleichs-Trajektorie ist.

Vorzugsweise wird die zumindest eine Posenschätzung mit zumindest einer weiteren Posenschätzung mit einer Gewichtung entsprechend der Unsicherheiten fusioniert. Zu diesem Zweck kann die Vorrichtung eine Fusionierungseinheit zum Fusionieren der zumindest einen Posenschätzung mit zumindest einer weiteren Posenschätzung mit einer Gewichtung entsprechend der Unsicherheiten aufweisen.

Erfindungsgemäß wird das Schätzergebnis dadurch verbessert, dass die Posenschätzungen mit geringerer Genauigkeit auch einen geringeren Beitrag zum Gesamtergebnis beitragen. Dies wird dadurch erreicht, dass die einzelnen Eingangsposen anhand von A-Priori Informationen verglichen werden und auf deren Plausibilität getestet werden. Eine mit einer Unsicherheit behaftete Posenschätzung, die anhand der zusätzlichen Informationen als unplausibel eingestuft wird, erhält eine noch größere Unsicherheit. Dadurch wird sie beispielsweise im Fusionsverfahren weniger berücksichtigt. Im Kern bietet dieser Ansatz die Möglichkeit, basierend auf A-Priori-Informationen die Unsicherheit einer Posenschätzung zu skalieren. Dies wirkt sich insbesondere in Sensordatenfusionen positiv aus, da durch die Skalierung ihre wahre Unsicherheit besser wiedergegeben wird und Ausreißer-Messungen besser behandelt werden können. Aber auch das Ermitteln einer einzigen Posenschätzung reicht aus um das Verfahren anwenden zu können. Wenn beispielsweise lediglich eine Messung eines einzelnen GPS-Empfängers (GPS: Global Positioning System, Globales Positionsbestimmungssystem) weiterverarbeitet werden soll, ohne diese mit einer anderen Quelle zu fusionieren, kann mit der beschriebenen Lösung eine genaue Unsicherheitsschätzung dieser einen Posen-Quelle erreicht werden. Zudem kann das Verfahren auch auf eine einzelne Posenschätzung angewendet werden, die dann mit Posenschätzungen fusioniert wird, auf die das Verfahren nicht angewendet wurde.

Die hier vorgestellte Methode lässt sich für alle der einleitend genannten Fusionsverfahren anwenden. Dies liegt daran, dass in der Fusion die Unsicherheitsschätzungen der Eingangsposenschätzungen gebraucht werden, um die einzelnen Informationen zueinander zu gewichten. Für diese Gewichtung gilt, dass die einzelne Posenschätzung umso mehr Gewicht bekommt, je kleiner ihre Unsicherheit ist. Formal ausgedrückt bedeutet das, dass der Gewichtungsterm $\Omega_i$ gegeben ist als die Inverse der Kovarianzmatrix: $\Omega_i = \Sigma_i^{-1}$. Daher ist die korrekte Unsicherheitsschätzung der Eingangsposenschätzungen von großer Bedeutung.

Im Idealfall liegt also für jede Eingangsposenschätzung auch eine zugehörige Kovarianzmatrix $\Sigma_i$ vor, die die Schätzunsicherheit angibt. In der Realität sind diese Unsicherheitsschätzungen von schwankender Qualität. So gibt es Systeme, die nur eine konstante Kovarianzmatrix liefern, also fälschlicherweise alle Posenschätzungen als gleich gut einschätzen gemäß

$$\Sigma_i = \Sigma \quad \forall i \, . \hspace{4cm} (1)$$

Dies kann z.B. dann der Fall sein, wenn die Unsicherheitsschätzung nicht analytisch vorgenommen werden kann, sondern nur aufgrund des Vergleichs der Posenschätzdaten gegenüber einer Referenz eine Stichprobenvarianz bestimmt werden konnte.

Ein Beispiel dafür sind Positionsschätzungen eines GPS-Receivers. Im normalen Betrieb kann die geschätzte Unsicherheit innerhalb weniger Meter liegen und damit den normalen Betrieb gut abbilden. Falls es jedoch zu Mehrwegeffekten kommt (engl. multipath propagation), kann die Positionsschätzung um mehrere Dutzend Meter daneben liegen. Falls der Algorithmus, der aus den GPS-Receiver-Daten die Positionsschätzung bestimmt, dies nicht berücksichtigt, ist die geschätzte Unsicherheit viel zu klein für den tatsächlichen Fehler. Solche Vorgehensweisen sind im besten Fall eine Approximierung der Unsicherheiten der Posenschätzungen, im schlechtesten Fall jedoch einfach unzutreffend. Die Posenschätzungen können Fehler enthalten, die deutlich größer sind als das, was durch die zugehörige Kovarianzmatrix ausgedrückt wird.

Erfindungsgemäß handelt es sich bei der A-Priori-Information um eine Vergleichs-Trajektorie. Derartige A-Priori-Informationen lassen sich relativ einfach ermitteln. Die hier beschriebene Lösung stellt eine Möglichkeit dar, Unsicherheitsschätzungen von Posenschätzungen zu skalieren, wenn zusätzliches Wissen in Form einer Vergleichs-Trajektorie existiert. Die Lösung beruht auf einem Plausibilitäts-Check von geschätzten Eingangs-Posen anhand dieser Vergleichs-Trajektorie. Das zugrundeliegende Verfahren ist schnell und online durchführbar, da lediglich ein Abstand der Posenschätzung zur Vergleichs-Trajektorie ermittelt werden muss. Die Vergleichs-Trajektorie kann aus verschiedenen Quellen kommen. Beispielsweise kann die geometrische Straßenmittellinie übernommen werden. Für autonome Fahrzeuge kann alternativ die berechnete Soll-Trajektorie der Bahnplanung als Vergleichs-Trajektorie dienen. Auch die Trajektorien von vorausfahrenden Fahrzeugen, sogenannten Scouting-Fahrzeugen, können als Vergleichs-Trajektorie dienen.

Erfindungsgemäß wird die Unsicherheitsschätzung umso größer skaliert, je größer der Abstand der zugehörigen Posenschätzung zur Vergleichs-Trajektorie ist. Posenschätzungen mit großem Abstand zur Vergleichs-Trajektorie sind per se unwahrscheinlicher, was durch eine größere Unsicherheitsschätzung ausgedrückt wird. Durch die Skalierung der Unsicherheitsschätzung entsprechend der Entfernung von der Vergleichs-Trajektorie lässt sich auf einfache Weise eine besser zutreffende Unsicherheit bestimmen.

Gemäß einem Aspekt der Erfindung wird die Vergleichs-Trajektorie aus einer detaillierten Karte ermittelt. Durch die Übernahme der geometrischen Straßenmittellinie aus einer detaillierten Karte kann auf einfache Weise eine Vergleichs-Trajektorie bereitgestellt werden.

Gemäß einem Aspekt der Erfindung wird mit einem Kamera-System ein Abstand des Kraftfahrzeugs zur Vergleichs-Trajektorie ermittelt. Mit einem Kamera-System können Fahrstreifenbegrenzungen links und rechts des Kraftfahrzeugs erfasst und so der Abstand des Kraftfahrzeugs zur Vergleichs-Trajektorie berechnet werden. Diese Zusatzinformation hilft, um Situationen zu erkennen, in denen sich das Kraftfahrzeug nicht nahe der Vergleichs-Trajektorie, beispielsweise der Fahrstreifenmitte befindet. Somit kann der Abstand der Posenschätzung zur Vergleichs-Trajektorie ersetzt werden durch den Abstand zur Vergleichs-Trajektorie plus den Abstand, den das Kamera-System relativ zur Vergleichs-Trajektorie berechnet hat.

Gemäß einem Aspekt der Erfindung liegt der Skalierung eine symmetrische Skalierungsfunktion oder eine an eine Fahrzeugumfeld angepasste Skalierungsfunktion zugrunde. In der Regel sollte die Richtung der Abweichung von der Vergleichs-Trajektorie keine Rolle für die Größe der Skalierung spielen, was durch eine symmetrische Skalierungsfunktion ausgedrückt wird. Situationsbedingt kann aber auch eine unsymmetrische Skalierungsfunktion sinnvoll sein, beispielsweise wenn aufgrund baulicher Begebenheiten Abweichungen von der Vergleichs-Trajektorie in eine bestimmte Richtung sehr unwahrscheinlich oder gar unmöglich sind.

Gemäß einem Aspekt der Erfindung werden auf Basis der A-Priori-Information unplausible oder sehr unwahrscheinliche Posenschätzungen vom Fusionieren ausgeschlossen. Zwar dient die Skalierung vorwiegend dazu, die Unsicherheit entsprecht der Entfernung von einer Vergleichs-Trajektorie zu skalieren. Je nach Skalierungsfunktion kann die Skalierung aber auch dazu benutzt werden, sehr unwahrscheinliche Posenschätzungen vollständig zu entfernen. Auf diese Weise kann sichergestellt werden, dass unplausible Posenschätzungen das Ergebnis der Fusionierung nicht negativ beeinflussen.

Gemäß einem Aspekt der Erfindung wird eine Unsicherheitsschätzung für die durch das Fusionieren ermittelte Pose des Kraftfahrzeugs durchgeführt. Die korrekte Größenordnung der Unsicherheitsschätzung von Posenschätzungen ist nicht nur für Ortungsfusionen bedeutend. Beispielsweise kann die Unsicherheitsschätzung der Fahrzeugpose auch bei der Bahnplanung von autonomen Fahrzeugen einbezogen werden.

Vorzugsweise werden ein erfindungsgemäßes Verfahren oder eine erfindungsgemäße Vorrichtung in einem Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.

Fig. 1    zeigt schematisch ein Verfahren zur Schätzung einer Pose eines Kraftfahrzeugs;

Fig. 2    zeigt eine erste Ausführungsform einer Vorrichtung zur Schätzung einer Pose eines Kraftfahrzeugs;

Fig. 3    zeigt eine zweite Ausführungsform einer Vorrichtung zur Schätzung einer Pose eines Kraftfahrzeugs;

Fig. 4    stellt schematisch ein Kraftfahrzeug dar, in dem eine erfindungsgemäße Lösung realisiert ist;

Fig. 5    verdeutlicht die Skalierung der Unsicherheitsschätzung auf Grundlage des Abstands von einer Vergleichs-Trajektorie;

Fig. 6    illustriert eine erste mögliche Skalierungsfunktion; und

Fig. 7    illustriert eine zweite mögliche Skalierungsfunktion.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

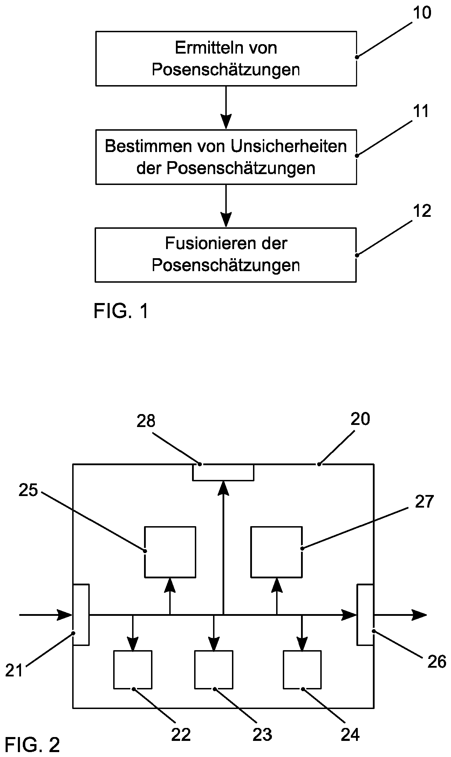

Fig. 1 zeigt schematisch ein Verfahren zur Schätzung einer Pose eines Kraftfahrzeugs. In einem ersten Schritt wird zumindest eine Posenschätzung ermittelt 10. Zudem wird eine Unsicherheit der zumindest einen Posenschätzung bestimmt 11. Das Bestimmen 11 der Unsicherheit der Posenschätzung umfasst dabei eine auf einem Vergleich der Posenschätzung mit A-Priori-Information beruhende Skalierung einer Unsicherheitsschätzung der Posenschätzung. Vorzugsweise wird die zumindest eine Posenschätzung schließlich mit zumindest einer weiteren Posenschätzung mit einer Gewichtung entsprechend der Unsicherheiten fusioniert 12. Dabei kann eine Unsicherheitsschätzung für die durch das Fusionieren 12 ermittelte Pose des Kraftfahrzeugs durchgeführt werden. Bei der A-Priori-Information kann es sich um eine Vergleichs-Trajektorie handeln, beispielsweise eine Fahrstreifenmitte, eine Soll-Trajektorie einer Bahnplanung oder eine Trajektorie eines vorausfahrenden Fahrzeugs. Die Vergleichs-Trajektorie kann z.B. aus einer detaillierten Karte ermittelt werden. Die Unsicherheitsschätzung wird vorzugsweise umso größer skaliert, je größer der Abstand der zugehörigen Posenschätzung zur Vergleichs-Trajektorie ist. Der Skalierung liegt dabei eine symmetrische Skalierungsfunktion oder eine an eine Fahrzeugumfeld angepasste Skalierungsfunktion zugrunde. Zudem können auf Basis der A-Priori-Information unplausible oder sehr unwahrscheinliche Posenschätzungen vom Fusionieren ausgeschlossen werden.

Fig. 2 zeigt eine vereinfachte schematische Darstellung einer ersten Ausführungsform einer Vorrichtung 20 zur Schätzung einer Pose eines Kraftfahrzeugs. Die Vorrichtung 20 hat einen Eingang 21 zum Empfangen von Daten, die eine Posenschätzung erlauben. Eine Datenerfassungseinheit 22 ermittelt zumindest eine Posenschätzung. Eine Bewertungseinheit 23 bestimmt eine Unsicherheit der zumindest einen Posenschätzung. Beim Bestimmen der Unsicherheit der Posenschätzung führt die Bewertungseinheit 23 eine auf einem Vergleich der Posenschätzung mit A-Priori-Information beruhende Skalierung einer Unsicherheitsschätzung der Posenschätzung durch. Bei der A-Priori-Information kann es sich um eine Vergleichs-Trajektorie handeln, beispielsweise eine Fahrstreifenmitte, eine Soll-Trajektorie einer Bahnplanung oder eine Trajektorie eines vorausfahrenden Fahrzeugs. Die Vergleichs-Trajektorie kann z.B. aus einer detaillierten Karte ermittelt werden. Die Unsicherheitsschätzung wird vorzugsweise umso größer skaliert, je größer der Abstand der zugehörigen Posenschätzung zur Vergleichs-Trajektorie ist. Der Skalierung liegt dabei eine symmetrische Skalierungsfunktion oder eine an eine Fahrzeugumfeld angepasste Skalierungsfunktion zugrunde. Zudem können auf Basis der A-Priori-Information unplausible oder sehr unwahrscheinliche Posenschätzungen vom Fusionieren ausgeschlossen werden. Vorzugsweise fusioniert eine Fusionierungseinheit 24 schließlich die zumindest eine Posenschätzung mit zumindest einer weiteren Posenschätzung mit einer Gewichtung entsprechend der Unsicherheiten. Dabei kann eine Unsicherheitsschätzung für die durch das Fusionieren ermittelte Pose des Kraftfahrzeugs durchgeführt werden. Die von der Bewertungseinheit 23 oder der Fusionierungseinheit 24 generierten Daten werden selbsttätig oder als Reaktion auf eine Anforderung über einen Ausgang 26 der Vorrichtung 20 für eine weitere Verarbeitung bereitgestellt. Die Datenerfassungseinheit 22, die Bewertungseinheit 23 und die Fusionierungseinheit 24 können von einer Kontrolleinheit 25 gesteuert werden. Über eine Benutzerschnittstelle 28 können gegebenenfalls Einstellungen der Datenerfassungseinheit 22, der Bewertungseinheit 23, der Fusionierungseinheit 24 oder der Kontrolleinheit 25 geändert werden. Die in der Vorrichtung 20 anfallenden Daten, beispielsweise die von der Bewertungseinheit 23 oder der Fusionierungseinheit 24 generierten Daten, können in einem Speicher 27 der Vorrichtung 20 abgelegt werden, beispielsweise für eine spätere Auswertung oder für eine Nutzung durch die Komponenten der Vorrichtung 20. Die Datenerfassungseinheit 22, die Bewertungseinheit 23, die Fusionierungseinheit 24 sowie die Kontrolleinheit 25 können als dezidierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU. Der Eingang 21 und der Ausgang 26 können als getrennte Schnittstellen oder als eine kombinierte bidirektionale Schnittstelle implementiert sein.

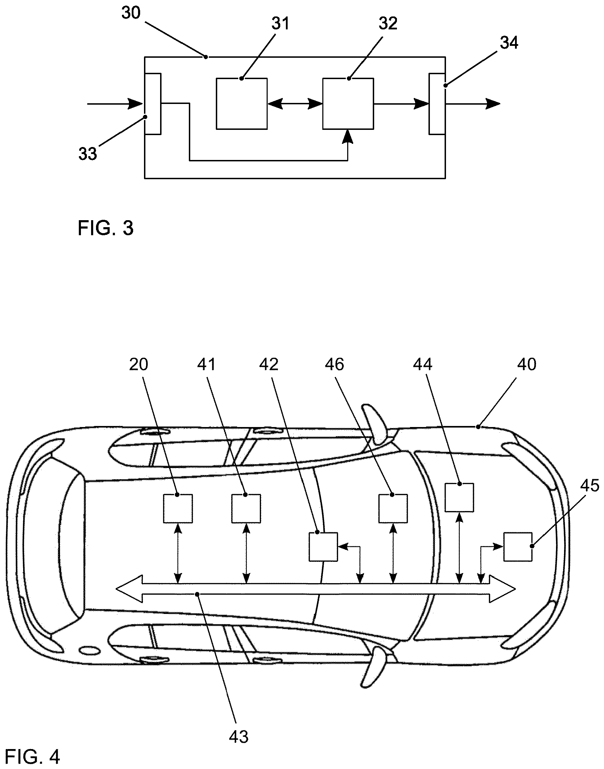

Fig. 3 zeigt eine vereinfachte schematische Darstellung einer zweiten Ausführungsform einer Vorrichtung 30 zur Schätzung einer Pose eines Kraftfahrzeugs. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung hat einen Eingang 33 zum Empfangen von Informationen, beispielsweise von Daten, die von einer Sensorik des Kraftfahrzeugs erfasst wurden. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 27, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch ein Kraftfahrzeug 40 dar, in dem eine erfindungsgemäße Lösung realisiert ist. Das Kraftfahrzeug 40 weist unter anderem ein Navigationssystem 41 und eine Umgebungssensorik 42 auf, beispielsweise ein Kamera- oder Radarsystem. Die vom Navigationssystem 41 und der Umgebungssensorik 42 erfassten Daten werden über ein Netzwerk 43 an eine Vorrichtung 20 zur Schätzung einer Pose des Kraftfahrzeugs 40 übermittelt. Die von der Vorrichtung 20 generierten Daten können in einem Speicher 44 des Kraftfahrzeugs 40 abgelegt werden. Zudem können sie einem Fahrerassistenzsystem 45 des Kraftfahrzeugs 40 zur Verfügung gestellt werden, beispielsweise für eine Bahnplanung. Weiterhin können die Daten dem Fahrer mittels einer Nutzerschnittstelle 46, beispielsweise einem Infotainmentsystem mit einer Anzeigevorrichtung, mitgeteilt werden.

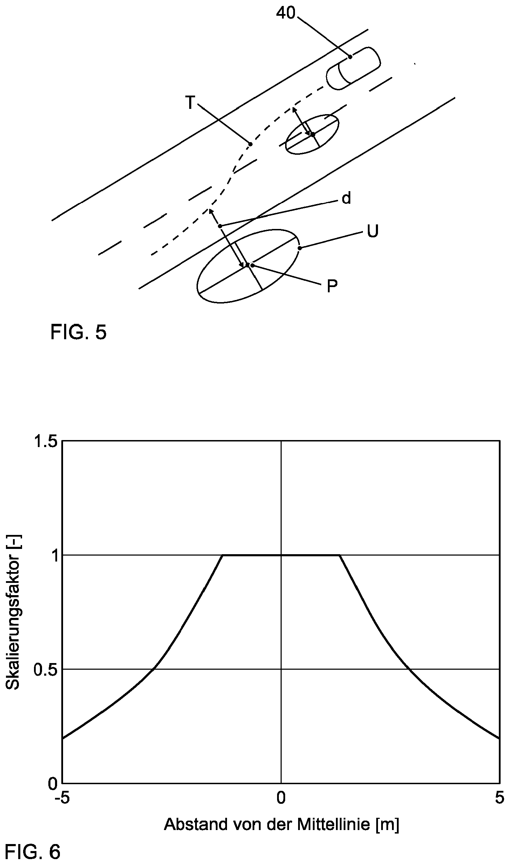

Nachfolgend soll eine bevorzugte Ausführungsform der Erfindung anhand der Figuren 5 bis 7 erläutert werden, wobei eine Vergleichs-Trajektorie als A-Priori-Information genutzt wird.

Für beliebige Posenschätzungen soll bestimmt werden, ob die Unsicherheit zu klein geschätzt wurde. Die i-te Eingangs-Pose $z_i$ wird dabei modelliert als die "wahre" Pose $p_i$ plus einem Messfehler $\varepsilon_i$, welcher sich mit einer Gauss-Verteilung beschreiben lässt:

$$z_i = p_i + \varepsilon_i, \quad \varepsilon_i \sim \mathcal{N}(0, \Sigma_i) \qquad (2)$$

Mithilfe von Zusatzinformationen, wie z.B. einer hochgenauen Karte der Straßengeometrie, kann die Kovarianzmatrix skaliert werden, um eine bessere Modellierung der Eingangsdaten zu erreichen. Auch für andere Anwendungen außer Ortungsfusionen ist die korrekte Größenordnung der Unsicherheitsschätzung von Posenschätzungen bedeutend. Beispielsweise kann die Bahnplanung von autonomen Fahrzeugen die Unsicherheitsschätzung der Fahrzeugpose miteinbeziehen.

Es ist zu beachten, dass das Verfahren unabhängig von der Quelle und dem Sensor funktioniert, welcher eine Posenschätzung vorgenommen hat. Es basiert nicht auf den zugrundeliegenden Messeigenschaften eines Sensors, sondern basiert nur auf der geschätzten Pose selbst und ist daher für grundsätzlich jede Posenschätzung anwendbar, solange einige Annahmen erfüllt sind, die weiter unten erläutert werden.

Jede Posenschätzung wird unabhängig voneinander bearbeitet. Dieses Verfahren ist daher für eine Online-Verarbeitung ausgelegt, aber auch offline durchführbar. Das hier beschriebene Verfahren beruht im Kern auf dem Vergleich zwischen einer Vergleichs-Trajektorie und einer Posenschätzung. Wenn diese Posenschätzung weit von der Vergleichs-Trajektorie entfernt ist, wird die Unsicherheit entsprechend skaliert.

Diese Vergleichstrajektorie kann aus mehreren Quellen stammen. Zum einen kann sie immer als die geometrische Straßenmittellinie aus detaillierten Karten entnommen werden. Dies kann sowohl für nicht-autonome wie auch für autonome Fahrzeuge geschehen. Für autonome Fahrzeuge kann alternativ die berechnete Soll-Trajektorie der Bahnplanung als Vergleichs-Trajektorie dienen. In Bereichen, in denen keine Karten existieren, gibt es für autonome Fahrzeuge teilweise Trajektorien von vorausfahrenden Fahrzeugen, sog. Scouting-Fahrzeuge, denen sie folgen sollen. Diese können auch als Vergleichs-Trajektorien dienen.

Um den Vergleich zwischen einer Posenschätzung und der Vergleichs-Trajektorie zu ermöglichen, muss die Posenschätzung im gleichen Koordinatensystem wie die Vergleichs-Trajektorie existieren oder in dieses transformierbar sein. Für die Nutzung der Fahrbahnmitte als Vergleichs-Trajektorie bedeutet dies, dass nur Posenschätzungen verarbeitet werden können, die ebenfalls in diesem Koordinatensystem vorliegen. Dies schließt z.B. Posenschätzungen aus, die im Fahrzeugkoordinatensystem gültig sind, beispielsweise von einer Odometrie-Einheit. Hingegen sind Posenschätzungen aus GPS-Daten dafür verwendbar, da sie im gleichen Koordinatensystem wie die Karte vorliegen. Alle Posenschätzungen, die von kartenrelativen Lokalisierungsalgorithmen kommen, sind ebenfalls verwendbar.

Die konkrete Darstellung und Parametrierung der Vergleichs-Trajektorie ist dabei unwichtig. Sie kann sowohl durch stückweise lineare Darstellung gegeben sein, durch Polynome $n$-ten Grades, durch Klothoiden, etc. Es ist ausreichend, dass der Abstand einer Posenschätzung zu dieser Vergleichs-Trajektorie bestimmt werden kann.

Eine Grundidee des Verfahrens besteht dann darin, über diesen Abstand die Unsicherheitsschätzung der zugehörigen Posenschätzung zu skalieren. Fig. 5 verdeutlicht das Ziel dieses Vorgehens anhand einer Vergleichs-Trajektorie T, die einen Fahrstreifenwechsel vorgibt. Dargestellt sind absolute Positionsschätzungen P mit zugehöriger Unsicherheit U mit unterschiedlichem Abstand d zur Vergleichs-Trajektorie T eines Fahrzeugs 40. Die Kovarianzmatrix, welche die Unsicherheit der Messung beschreibt, wird proportional zum Abstand zur Vergleichs-Trajektorie skaliert. Posenschätzungen mit großem Abstand zur Vergleichs-Trajektorie sind per se unwahrscheinlicher, was durch eine größere Unsicherheitsschätzung in Form der Kovarianzmatrix ausgedrückt wird.

Die im Folgenden dargestellte Ausführungsform ist auf ein zweidimensionales Koordinatensystem beschränkt. Dafür wird von Posen in der Ebene (2D) ausgegangen. Diese werden als Position in $x$, $y$ und Heading $\psi$ beschrieben: $p_i = [x, y, \psi]^T$. Das Verfahren ist jedoch auch direkt anwendbar, wenn man nur die Position ohne Heading betrachtet, oder wenn man alle sechs Freiheitsgrade für die Posenschätzung in Betracht zieht.

Nachfolgend wird davon ausgegangen, dass für die i-te Posenschätzung $p_i$ der Abstand zur Vergleichs-Trajektorie (im Fahrzeugkoordinatensystem) in longitudinaler Richtung (positiv in Fahrtrichtung) $\delta_x$, in lateraler Richtung

(positiv nach links) $\delta_y$ und im Heading (positiv drehend nach links) $\delta_\psi$ bestimmt wurde. Das genaue Verfahren dafür ist hier ohne Bedeutung. Es kann beispielsweise mit einfachen Mitteln eine Zuordnung zu dem entsprechenden Punkt der Vergleichs-Trajektorie vorgenommen und anschließend der Abstand berechnet werden.

Eine alternative, konkrete Ausführungsform besteht darin, dass die Fahrstreifenmitte als Vergleichs-Trajektorie dienen soll. Dieser Fall ist zum Beispiel sinnvoll im Rahmen von nicht-autonomen Fahrzeugen, da sich die Fahrer relativ zur Fahrstreifenmitte orientieren. Mit einem Kamera-System können nun die Fahrstreifenbegrenzungen links und rechts erfasst und so der Abstand des Fahrzeugs zur Fahrstreifenmitte berechnet werden. Diese Zusatzinformation hilft, um Situationen zu erkennen, in denen sich das Fahrzeug nicht nahe der Fahrstreifenmitte befindet. Somit kann der Abstand der Posenschätzung zur Fahrstreifenmitte ersetzt werden durch den Abstand zur Fahrstreifenmitte plus den Abstand, den das Kamera-System relativ zur Fahrstreifenmitte berechnet hat.

Ziel ist es nun, eine Skalierung für die Kovarianzmatrix zu entwickeln. Dafür wird eine Skalierungsmatrix S entwickelt, die auf Funktionen $s_x(\delta_x)$, $s_y(\delta_y)$ und $s_\psi(\delta_\psi)$ basiert. Um das Problem allgemeingültig zu beschreiben, wird S als Matrix repräsentiert. S ist gegeben als

$$S = \begin{bmatrix} s_x(\delta_x) & 0 & 0 \\ 0 & s_y(\delta_y) & 0 \\ 0 & 0 & s_\psi(\delta_\psi) \end{bmatrix} = L_S L_S^T, \qquad (3)$$

wobei die Matrix $L_s$ die Cholesky-Zerlegung von S ist. Für eine Diagonalmatrix ist die Cholesky-Zerlegung sehr simpel, da einfach die Wurzel aus den Diagonaleinträgen genommen werden kann. Die Skalierung der Gewichtungsmatrix $\Omega_i$ geschieht in der Form

$$\overline{\Omega}_i = L_S \Omega_i L_S^T. \qquad (4)$$

Damit ist angegeben, wie eine Skalierung angewendet werden soll. Nun muss noch bestimmt werden, wie eine solche Skalierungsfunktion für die Gewichtungsmatrix konkret beschaffen sein sollte. Ausgangspunkt dafür ist eine Funktion $s_k(\delta_k)$ mit $k \in \{x, y, \psi\}$. Sie sollte folgende Bedingungen erfüllen:

1. $s_k(\delta_k) > 0$: Die Skalierungsfunktion muss über den gesamten Wertebereich positiv sein, um die positive Definitheit der Kovarianzmatrizen zu garantieren.

2. $s_k(\delta_k) = s_k(-\delta_k)$: Die Skalierungsfunktion soll symmetrisch sein, da die Richtung der Abweichung von der Vergleichs-Trajektorie in der Regel keine Rolle für die Größe der Skalierung spielen sollte.

3. $s_k(\delta_{k,1}) \leq s_k(\delta_{k,2})$ für $|\delta_{k,1}| \leq |\delta_{k,2}|$: Es sollte immer der Fall sein, dass eine weiter von der Vergleichs-Trajektorie entfernte Messung maximal genauso stark skaliert wird, wie eine Messung, die näher an der Vergleichs-Trajektorie liegt.

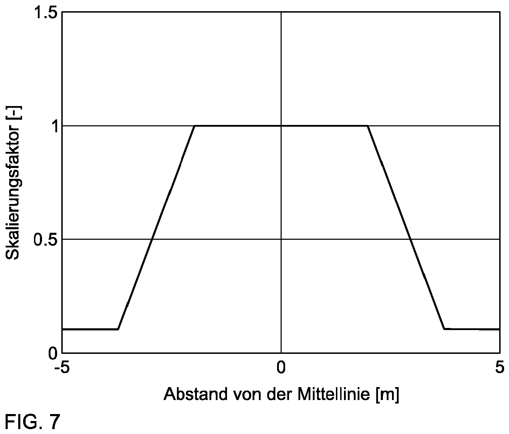

Fig. 6 und Fig. 7 zeigen zwei beispielhafte Funktionen für die Skalierung der Gewichtungsmatrix, die die oben genannten Bedingungen erfüllen.

Hierbei ist zu beachten, dass die zuvor genannten Bedingungen keine Voraussetzung für die Anwendung der Methodik sind. Es sind auch andere Skalierungsfunktionen möglich, die diesen Bedingungen zum Teil widersprechen. So können beispielsweise noch weitere Karteninformationen in die Form der Skalierungsfunktion einfließen. Man stelle sich dafür folgende Situation vor: Ein Fahrzeug fährt eine Straße entlang, auf der einen Seite befindet sich ein Gebäude und auf der anderen Seite ein Parkplatz. Anstatt die Skalierungsfunktion als symmetrisch anzunehmen, wird eine an die Situation angepasste Form der Funktion genutzt. Verrauschte Messungen, die die Position des Fahrzeugs in dem Gebäude angeben, werden nicht mehr in dem Optimierungsproblem berücksichtigt. Wenn hingegen eine Messung auf die Position des Fahrzeugs auf dem Parkplatz deutet, wird diese Messung zwar weniger stark berücksichtigt, aber sie ist nicht so abwegig wie eine Messung der Position in dem Gebäude. Eine vergleichbare Situation ist z.B. die Fahrt über eine Brücke. Eine Posenschätzung, die jenseits der befahrbaren Straße liegt, ist in dieser Situation als absolut unplausibel zu bewerten.

**Bezugszeichenliste**

| | |
|---|---|
| 10 | Ermitteln von Posenschätzungen |
| 11 | Bestimmen von Unsicherheiten der Posenschätzungen |
| 12 | Fusionieren der Posenschätzungen |
| 20 | Vorrichtung |
| 21 | Eingang |
| 22 | Datenerfassungseinheit |
| 23 | Bewertungseinheit |
| 24 | Fusionierungseinheit |
| 25 | Kontrolleinheit |
| 26 | Ausgang |
| 27 | Speicher |
| 28 | Benutzerschnittstelle |
| 30 | Vorrichtung |
| 31 | Speicher |
| 32 | Prozessor |
| 33 | Eingang |
| 34 | Ausgang |
| 40 | Kraftfahrzeug |
| 41 | Navigationssystem |
| 42 | Umgebungssensorik |
| 43 | Netzwerk |
| 44 | Speicher |
| 45 | Fahrerassistenzsystem |
| 46 | Nutzerschnittstelle |
| P | Positionsschätzung |
| U | Unsicherheit |
| T | Vergleichs-Trajektorie |
| d | Abstand zur Vergleichs-Trajektorie |

**Patentansprüche**

1. Verfahren zur Schätzung einer Pose eines Kraftfahrzeugs (40), mit den Schritten:

    - Ermitteln (10) von zumindest einer Posenschätzung; und
    - Bestimmen (11) einer Unsicherheit der zumindest einen Posenschätzung;

    **dadurch gekennzeichnet, dass** das Bestimmen (11) der Unsicherheit der Posenschätzung eine auf einem Vergleich der Posenschätzung mit A-Priori-Information beruhende Skalierung einer Unsicherheitsschätzung der Posenschätzung umfasst,
    wobei es sich bei der A-Priori-Information um eine Vergleichs-Trajektorie handelt und wobei die Unsicherheitsschätzung umso größer skaliert wird, je größer der Abstand der zugehörigen Posenschätzung zur Vergleichs-Trajektorie ist.

2. Verfahren gemäß Anspruch 1, **wobei** es sich bei der Vergleichs-Trajektorie um eine Fahrstreifenmitte, eine Soll-Trajektorie einer Bahnplanung oder eine Trajektorie eines vorausfahrenden Fahrzeugs handelt.

3. Verfahren gemäß Anspruch 1 oder 2, **wobei** die Vergleichs-Trajektorie aus einer detaillierten Karte ermittelt wird.

4. Verfahren gemäß einem der Ansprüche 1 bis 3, **wobei** mit einem Kamera-System ein Abstand des Kraftfahrzeugs (40) zur Vergleichs-Trajektorie ermittelt wird.

5. Verfahren gemäß einem der vorherigen Ansprüche, **wobei** der Skalierung eine symmetrische Skalierungsfunktion oder eine an eine Fahrzeugumfeld angepasste Skalierungsfunktion zugrunde liegt.

**6.** Verfahren gemäß einem der vorherigen Ansprüche, **wobei** die zumindest eine Posenschätzung mit zumindest einer weiteren Posenschätzung mit einer Gewichtung entsprechend der Unsicherheiten fusioniert (12) wird.

**7.** Verfahren gemäß Anspruch 6, **wobei** auf Basis der A-Priori-Information unplausible oder sehr unwahrscheinliche Posenschätzungen vom Fusionieren (12) ausgeschlossen werden.

**8.** Verfahren gemäß Anspruch 6 oder 7, **wobei** eine Unsicherheitsschätzung für die durch das Fusionieren (12) ermittelte Pose des Kraftfahrzeugs (40) durchgeführt wird.

**9.** Computerlesbares Speichermedium mit Instruktionen, die bei Ausführung durch einen Computer den Computer zur Ausführung der Schritte eines Verfahrens gemäß einem der Ansprüche 1 bis 8 zur Schätzung einer Pose eines Kraftfahrzeugs (40) veranlassen.

**10.** Vorrichtung (20) zur Schätzung einer Pose eines Kraftfahrzeugs (40), mit:

- Einer Datenerfassungseinheit (22) zum Ermitteln (10) von zumindest einer Posenschätzung; und
- Einer Bewertungseinheit (23) zum Bestimmen (11) einer Unsicherheit der zumindest einen Posenschätzung;

**dadurch gekennzeichnet, dass** die Bewertungseinheit (23) eingerichtet ist, beim Bestimmen (11) der Unsicherheit der Posenschätzung eine auf einem Vergleich der Posenschätzung mit A-Priori-Information beruhende Skalierung einer Unsicherheitsschätzung der Posenschätzung durchzuführen, wobei es sich bei der A-Priori-Information um eine Vergleichs-Trajektorie handelt und wobei die Unsicherheitsschätzung umso größer skaliert wird, je größer der Abstand der zugehörigen Posenschätzung zur Vergleichs-Trajektorie ist.

**11.** Vorrichtung (20) gemäß Anspruch 10, mit einer Fusionierungseinheit (24) zum Fusionieren (12) der zumindest einen Posenschätzung mit zumindest einer weiteren Posenschätzung mit einer Gewichtung entsprechend der Unsicherheiten.

**12.** Kraftfahrzeug (40), **dadurch gekennzeichnet, dass** es eine Vorrichtung (20) gemäß Anspruch 10 oder 11 aufweist oder eingerichtet ist, ein Verfahren gemäß einem der Ansprüche 1 bis 8 zur Schätzung einer Pose des Kraftfahrzeugs (40) auszuführen.

**Claims**

**1.** A method of estimating a pose of a motor vehicle (40), comprising the steps of:

- acquiring (10) at least one pose estimate; and
- determining (11) an uncertainty of the at least one pose estimate;

**characterized in that** determining (11) the uncertainty of the pose estimate comprises scaling an uncertainty estimate of the pose estimate based on a comparison of the pose estimate with a priori information, wherein the a priori information is a comparison trajectory, and wherein the larger the distance of the associated pose estimate from the comparison trajectory, the larger the uncertainty estimate is scaled.

**2.** The method as claimed in claim 1, wherein the comparison trajectory is a center of a lane, a target trajectory of a path planning process, or a trajectory of a vehicle traveling ahead.

**3.** The method as claimed in claim 1 or 2, wherein the comparison trajectory is acquired from a detailed map.

**4.** The method as claimed in one of claims 1 to 3, wherein a distance of the motor vehicle (40) from the comparison trajectory is acquired with a camera system.

**5.** The method as claimed in one of the preceding claims, wherein the scaling is based on a symmetrical scaling function or a scaling function which is adapted to the surroundings of the vehicle.

**6.** The method as claimed in one of the preceding claims, wherein the at least one pose estimate is fused (12) with at least one further pose estimate with a weighting corresponding to the uncertainties.

7. The method as claimed in claim 6, wherein pose estimates that are implausible or very improbable on the basis of the a priori information are excluded from the fusing (12).

8. The method as claimed in claim 6 or 7, wherein an uncertainty estimation is carried out for the pose of the motor vehicle (40) determined by the fusing (12).

9. A computer-readable storage medium with instructions which, when executed by a computer, cause the computer to execute the steps of a method as claimed in one of claims 1 to 8 for estimating a pose of a motor vehicle (40;

10. A device (20) for estimating a pose of a motor vehicle (40), with:

   - a data acquisition unit (22) for acquiring (10) at least one pose estimate; and
   - an evaluation unit (23) for determining (11) an uncertainty of the at least one pose estimate;

   **characterized in that** the evaluation unit (23) is configured, in determining (11) the uncertainty of the pose estimate, to perform a scaling of an uncertainty estimate of the pose estimate based on a comparison of the pose estimate with a priori information, wherein the a priori information is a comparison trajectory and wherein the greater the distance of the associated pose estimate from the comparison trajectory, the greater the uncertainty estimate is scaled.

11. The device (20) as claimed in claim 10, having a fusing unit (24) for fusing (12) the at least one pose estimate with at least one further pose estimate with a weighting corresponding to the uncertainties.

12. A motor vehicle (40), **characterized in that** is has a device (20) as claimed in claim 10 or 11 or is configured to execute a method as claimed in one of claims 1 to 8 for estimating a pose of the motor vehicle (40).

**Revendications**

1. Procédé permettant d'estimer une position d'un véhicule automobile (40), comprenant les étapes consistant à :

   - établir (10) au moins une estimation de position ; et
   - déterminer (11) une incertitude de ladite au moins une estimation de position ;

   **caractérisé en ce que** la détermination (11) de l'incertitude de l'estimation de position comprend une mise à l'échelle d'une estimation d'incertitude de l'estimation de position basée sur une comparaison de l'estimation de position avec une information a priori, dans lequel l'information a priori est une trajectoire de comparaison, et l'estimation d'incertitude subit une mise à l'échelle d'autant plus importante que la distance de l'estimation de position associée par rapport à la trajectoire de comparaison est grande.

2. Procédé selon la revendication 1, dans lequel la trajectoire de comparaison est un centre de voie de circulation, une trajectoire de consigne d'une planification de cheminement ou une trajectoire d'un véhicule qui précède.

3. Procédé selon la revendication 1 ou 2, dans lequel la trajectoire de comparaison est établie à partir d'une carte détaillée.

4. Procédé selon l'une quelconque des revendications 1 à 3, dans lequel un système de caméra établit une distance du véhicule automobile (40) par rapport à la trajectoire de comparaison.

5. Procédé selon l'une quelconque des revendications précédentes, dans lequel la mise à l'échelle est basée sur une fonction de mise à l'échelle symétrique ou une fonction de mise à l'échelle adaptée à un environnement du véhicule.

6. Procédé selon l'une quelconque des revendications précédentes, dans lequel ladite au moins une estimation de position est fusionnée (12) avec au moins une autre estimation de position ayant une pondération selon les incertitudes.

7. Procédé selon la revendication 6, dans lequel des estimations de position incohérentes ou très improbables sont exclues de la fusion (12) sur la base de l'information a priori.

**8.** Procédé selon la revendication 6 ou 7, dans lequel une estimation d'incertitude est effectuée pour la position du véhicule automobile (40) établie par la fusion (12).

**9.** Support de stockage lisible par ordinateur, comprenant des instructions qui, lorsqu'elles sont exécutées par un ordinateur, amènent l'ordinateur à exécuter les étapes d'un procédé selon l'une quelconque des revendications 1 à 8 pour estimer une position d'un véhicule automobile (40).

**10.** Dispositif (20) permettant d'estimer une position d'un véhicule automobile (40), comprenant :

- une unité d'acquisition de données (22) pour établir (10) au moins une estimation de position ; et
- une unité d'évaluation (23) pour déterminer (11) une incertitude de ladite au moins une estimation de position ;

**caractérisé en ce que** l'unité d'évaluation (23) est aménagée, lors de la détermination (11) de l'incertitude de l'estimation de position, pour effectuer une mise à l'échelle d'une estimation d'incertitude de l'estimation de position basée sur une comparaison de l'estimation de position avec une information a priori, dans lequel l'information a priori est une trajectoire de comparaison, et l'estimation d'incertitude subit une mise à l'échelle d'autant plus importante que la distance de l'estimation de position associée par rapport à la trajectoire de comparaison est grande.

**11.** Dispositif (20) selon la revendication 10, comprenant une unité de fusion (24) pour fusionner (12) ladite au moins une estimation de position avec au moins une autre estimation de position ayant une pondération selon les incertitudes.

**12.** Véhicule automobile (40), **caractérisé en ce qu'**il présente un dispositif (20) selon la revendication 10 ou 11 ou est aménagé pour exécuter un procédé selon l'une quelconque des revendications 1 à 8 pour estimer une position du véhicule automobile (40).

FIG. 1

FIG. 2

30    31    32    34

33

FIG. 3

20    41    42    46    44    40

45

43

FIG. 4

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015219577
- WO 2015189183 A1
- WO 2015189204 A1
- WO 2013166096 A1
- US 7991550 B2
- DE 102013208521 A1
- DE 102014211178 A1
- US 20160231432 A1
- US 20170038477 A1
- DE 102016011366 A1